# EUROPEAN PATENT APPLICATION

(11) **EP 1 702 583 A1**
(43) Date of publication of application: **20.09.2006**
(21) Application number: 06013717.1
(22) Date of filing: 02.11.2000
(51) Int. Cl.: A61C 13/00, A61C 9/00

(54) **Dental cast model base**

(30) Priority: 04.11.1999 GB 9926003
(62) Divisional of application: 00309712.8
(71) Applicant: Taylor, Andrew Michael, Sheffield S18 2ER (GB)
(72) Inventor: Taylor, Andrew Michael, Sheffield S18 2ER (GB)
(74) Representative: Wood, Graham

(57) **Abstract**

The present invention relates to dental cast model bases and models cast in a mould in the same and, in particular, but not exclusively, dental models which are used by the dental profession in the fabrication of dental restorations. A dental cast model base for the production of dental model casts includes a mould adapted to produce a dental model cast when suitable material is poured therein and solidifies. Securing means are provided to secure the dental model, formed in the mould, with the mould, and these securing means extend into and/or through the mould walls into the model and are operable by having at least a part which is set within the model formed in the mould. A method of casting a dental model using such a dental cast mould is also described. The mould base described can be in a form for attachment to an articulator.

## Description

The present invention relates to dental cast model bases or trays and models cast in such a base or tray, and in particular, but not exclusively, dental models which are used in the dental profession in the fabrication of dental restorations. Model base moulds for dental models allow the dental model contained within to be removed, sectioned and subsequently re-assembled within the mould portion of the model base.

As the model bases allow for easy removal of individual sections of the model, lack of stability of the sections can occur which can seriously affect the accuracy of restorations, and which previously known model casts are unable to properly or satisfactorily address.

According to a first aspect of the present invention, there is provided a dental cast model base for the production of dental model casts comprising a model base, the model base having a mould adapted to produce a dental model and removable securing means to secure the dental model, formed in the mould, to the model base, characterised in that the securing means extends through the mould and is operable by having at least a part which is located spaced from the interior surface of the mould which part extends in use through a port or passage in the model.

Preferably, the locating port or passage extends through the model in spaced relationship from the upper rim and base of the mould, preferably in a parallel spaced relationship. Preferably, in a full base system there are two lateral and one anterior port or passage formed in the model. In a quadrant base system only one lateral port or passage will be formed. Preferably, the port or passage is formed during moulding of the model such that the port or passage is formed through the area of model to be sectioned.

In one embodiment the port or passage may extend through a plurality of areas of model which are to be sectioned, and preferably, through all the areas of model.

Preferably, a retaining member of the securing means extends through the mould and at least a part extends into the port or passage which is set within the model formed in the mould. By set within is meant spaced from the outer surface thereof prior to sectioning.

Preferably, the port or passage is formed by a sleeve which is placed within the model.

Preferably, the securing means sleeve, with or without the retaining member in position, is held within the mould and extends in such a manner that it is spaced from the lower surface and upper rim of the mould so that the model formed therein sets around the said at least part of the securing means within the mould.

Preferably, the securing means comprises a retaining member which is selectively positioned with a sleeve in the model and with the mould to secure the model, and model sections, with the mould and hence dental model base. Preferably, the sleeve is wholly contained within the area of the model. Preferably, although not necessarily, the retaining member is straight and, preferably, removable from the elongate sleeve and the model after setting of the model material around the sleeve. Alternatively, the retaining member may be curved. A curved retaining member is particularly advantageous for a quadrant base so that a single member may secure both the anterior and lateral sections.

Preferably, the retaining member extends through the sides of the mould and is removable from the mould to release the model formed.

Preferably, the retaining member is a pin which can be passed through an aperture in the sides of the mould and through the sleeve forming the port or passage within the model.

Advantageously, after the casting material is set in the mould, the retaining member, if provided, may be removed and the model, with the sleeve held therein, removed for conventional sectioning, typically so that each tooth or groups of teeth model is a separate section. Thereafter, the sectioned model may be located back within the mould with the sections in the correct positions and the retaining member inserted through the respective port or passage formed by the sleeve by sliding the same through the mould side walls and into the respective sleeve sections in each model section to thereby secure the sectioned model within the dental cast base. The model may be cut into one or more sections dependant upon the number of model teeth on which work is required.

It should be appreciated that the invention extends to a model of tooth or group of teeth having a locating port or passage formed therein spaced from the edges of the sectional model.

According to a second aspect of the present invention, there is provided a dental model base for the production of dental models the model base having a mould adapted to produce a dental model and removable securing means to secure the dental model formed in the mould, with the model base, and
characterised in that the securing means comprise a port or passage formed in the model and through or into which a retaining member can be inserted to secure the model with the base.

According to a third aspect of the present invention there is provided a method of casting a dental model using a dental model base as a mould comprising the steps of:-
placing one or a number of sleeves with a port or passage therethrough in position with respect to the mould side walls, retaining said sleeve or sleeves in position; and
adding the material which is to form the model into the mould, so as to at least partially incorporate the sleeve or sleeves within the material allowing the material to set with the sleeve or sleeves formed as part of the model.

The method may incorporate any one or more of the features of the first or second aspect of the present invention unless such features are mutually exclusive.

Preferably, the cross sectional area of the port or passage is sufficiently small so as not to compromise the strength of the model sections. Preferably, the sleeve is located to avoid contact with the lateral sides or base of the mould.

Preferably, the sleeves are formed from material which may be cut through during sectioning without compromising the integrity of the cast material. Preferably, the sleeve and/or retaining member is/are formed such that voids are provided between the sleeve and the security member. This may be provided for example by a square section sleeve around a retaining member of circular section, wherein the diameter of the retaining member is substantially equal to the side of the square. Alternatively, the sleeves may comprise inwardly extending protrusions on the interior surface thereof which are operable to space the retaining member from the interior wall of the sleeve and thereby provide a space therebetween.

Advantageously, by spacing the retaining member in this manner, swarf and dust generated by the sawing process may be displaced, on re-insertion of the retaining member, into the space between the retaining member and the interior surface of the sleeve. Furthermore, this type of design also provides secure but minimal point contact at the circumference of the retaining member which reduces friction within the sleeve when inserting and removing the retaining member.

A still further advantage of suspending or retaining the sleeves within the mould is that the external surfaces of the model base are substantially free of obstructions which allows universal fixing to articulators by conventional or novel methods. In addition, removal of the securing means does not require access to the underside of the model base. Furthermore, if the sectioned model is assembled incorrectly, the retaining member is not insertable, ensuring that the cause of the inaccuracy needs to be discovered and corrected before the model can be secured. A still further benefit of the invention is that the sleeve protects the model material from abrasion during repeated insertion and removal of the retaining member.

An additional advantage is that the retaining member can be inserted from anterior to posterior (A-P) or posterior to anterior (P-A). Preferably, the retaining member has a handle portion at one end thereof for assisting removal and insertion. As the handle portion can protrude, in use, from a side of the mould it is advantageous that it can be inserted A-P or P-A so that conflict with articulator components may be avoided irrespective of the type of articulator utilised.

Suitable material for the mould are plaster or artificial stone. A typical material for the model is α-hemihydrate of calcium sulphate. Preferably, the material has a hardness range which allows cutting thereof during sectioning of the model cast.

Typically, the invention is adapted as a base for a model of upper or lower teeth, preparations and edentulous areas but, preferably, is in the form of a quadrant base system or a full base system. Typically, the mould in the base is in the form of a channel preferably, having an anterior part of the channel and two lateral parts of the channel in a full base or only one lateral channel in a quadrant base. In a full base arrangement, it is preferred that three securing means are utilised each, preferably, formed by a retaining member and a sleeve for the retaining member.

In a preferred arrangement, three sleeves and respective retaining members are used with one sleeve extending along each of the lateral parts of the mould and a third sleeve extending across the laterally extending sleeves and along the anterior part of the mould. Each of the sleeves is then suspended in this arrangement, spaced from the base and upper rim of the mould, by the respective elongate, substantially straight retaining members which extend through the sleeves and pass through and are suspended by the walls of the mould at either end thereof.

In a quadrant base system only one lateral sleeve and retaining member is required as opposed to two.

Preferably, the retaining members are locked into position to securely lock the sections of the model in position after they have been relocated in the mould. This may be by means of a friction fit between the retaining member and the walls of the mould through which the retaining member extends.

Preferably, the mould, sleeves and retaining members form a model base system for the model produced therein.

Preferably, the anterior section of the model may be secured independently of the one or more lateral sections of the model. Preferably, both the anterior and lateral sections may be locked in position by the retaining member and the retaining member may be locked to the mould.

Preferably, the securing means are positioned in such a way that unrestricted access to the upper and lower surfaces of the model base is available which allows universal articulating methods.

Preferably, the positioning of the points of entry of the retaining members with respect to the mould are such as to avoid hindrance to the structure of an articulator.

Preferably, the model base hitherto described is in the form of a model base for an articulator.

The anterior and lateral retaining members of the invention may cross each other and it is preferred that the anterior and lateral retaining members are positioned with respect to the mould sides in such a way as to avoid cross-over aligned with an incisor tooth model. Preferably, cross-over is aligned with a canine and/or pre-molar model. Advantageously, this avoids the thinnest section incisor models from having too much erosion and reduces the risk of damage or failure thereof during use.

For the avoidance of doubt, the base is not exclusively for use with articulators and "freehand" uses are also envisaged.

An embodiment of the invention will now be described, by way of example, with reference to the accompanying drawings, in which:-
Figure 1 shows a perspective view of a model base, with a mould and retaining means in accordance with one embodiment of the present invention;
Figure 2 shows the model base with the retaining means removed;
Figure 3 shows the orientation of the sleeves together with the structure of two of the retaining means for location therein;
Figure 4 shows a cross sectional view of a sleeve in accordance with the present invention; and
Figure 5 illustrates a section of a model in accordance with the invention.

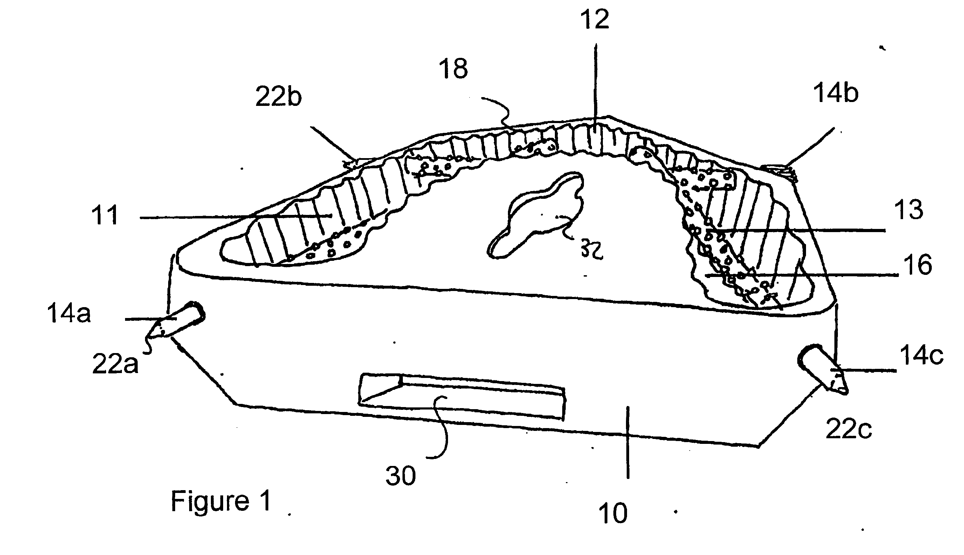

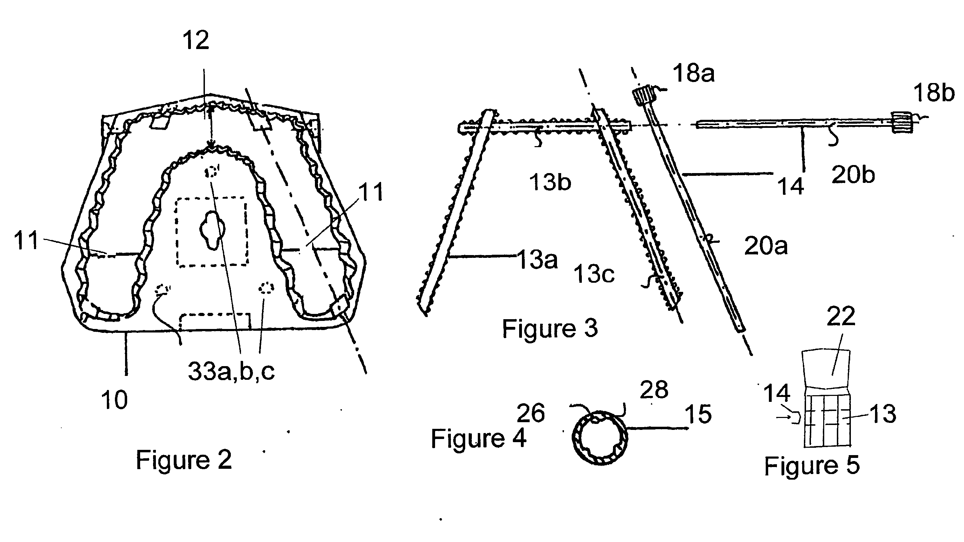

Referring to Figure 1, a dental model base 10, which, in this embodiment, is suitable for insertion in an articulator (not shown) and has a mould 11 shaped in a "U" shaped manner so as to be capable of moulding an upper or lower impression of a patients dentition. A plurality of vertical grooves 12 are provided on the inner and outer vertical walls of the mould. Three elongate retaining members 14a, b and c extend horizontally through the mould section spaced upwardly from the bottom surface 16 of the mould 11 and spaced downwardly from the upper rim 18 of the mould. The members are orientated so that one member extends along each of the lateral parts of the mould from the anterior to the posterior thereof and a third member extends from side to side across the anterior section of the mould. The members are arranged so that the anterior member 14b is located immediately below the lateral members 14a, 14c. Each member has a handling end 18 and a shaft 20 extending from the handling end 18a, 18b and terminating in a point 22 to form the retaining member. Each member is utilised with a respective elongate sleeve 13a, 13b, 13c each of which is effectively suspended within the mould by the pin passing therethrough with the sleeve being contained within the mould. As can be seen most clearly in Figure 4, the sleeves can have a series of inwardly radially projecting lobes 26 which are designed to extend radially inwardly to the extent necessary to provide close fitting engagement with the outer surface of the shaft 20 of the retaining members so that the shaft of the member is spaced from the interior wall 28 of the sleeve 13 with the retaining member passing along the port or passage formed by the sleeve.

The posterior face of the model base 10 includes a conventional elongate articulator slot 30 and the upper surface has a central section bounded on three sides by the mould and which includes a centrally located lobed circular aperture 32 for a dedicated articulator. The holes 33a, b and c are conventional in model base systems and are designed to be fitted to conventional articulator devices.

In use, to form the mould, the sleeves 13a, b, c are suspended within the mould secured at either end to the mould side walls of the model base wherein the material which forms the model is introduced into the mould to cover the sleeves. When the same has solidified, the retaining members can be removed to allow removal of the model if required with the same members then utilised to retain the subsequently sectioned model in the mould by placing the same through the ports or passages within the model. The grooved vertical walls of the mould have sufficient taper to allow the model contained therein to be removed easily, and to provide positive location of the model sections after sectioning of the model. The small cross sectional area of the resulting section of sleeve will not compromise the strength of the model section. The sectioned dental models, one of which is shown in Figure 5, can then be relocated within the base and as each has a part of the sleeve held within the model medium, the sections are secured with the mould by passing the member through the ports or passages in each of the model sections and through the walls of the mould.

The securing means arrangement provides an efficient way of securing the model in position on the base. Furthermore an essentially internal locking system is provided, hence freeing the external surface of the model base for the purposes of fixing to an articulator using conventional and future novel methods. The siting of the insertion positions of the rods/pins ensures that the pins may be inserted and removed without impinging on the articulator.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A dental cast model base for the production of dental model casts comprising a model base, the model base having a mould adapted to produce a dental model cast and removable securing means to secure a dental model, formed in the mould, to the model base, **characterised in that** the securing means extends through the mould and is operable by having at least a part which is located spaced from the interior surfaces of the mould which part extends, in use, through a port or passage in the model.

2. A dental cast model base according to claim 1, wherein the part extends through at least the area of the model to be sectioned.

3. A dental cast model base according to claim 1 or 2, wherein the port or passage extends through the model in spaced relationship from the upper rim and base of the mould.

4. A dental cast model base according to claim 3, wherein the locating port or passage so extends in parallel spaced relationship.

5. A dental cast model according to any preceding claim, wherein the port or passage is formed by part of the securing means during the forming of the model.

6. A dental cast model base according to any preceding claim, wherein the securing means is held and extends within the mould in such a manner that it is spaced from the lower surface and upper rim of the mould so that the model formed therein sets around the said at least part of the securing means in the mould.

7. A dental cast model base according o any preceding claim, wherein the securing means comprises a sleeve and a retaining member.

8. A dental cast model base according to claim 7, wherein the sleeve is contained within the area of the mould.

9. A dental cast model base according to claim 7 or 8, wherein the retaining member is substantially straight.

10. A dental cast model base according to any of claims 7-9, wherein the retaining member is selectively removable from the sleeve to free the model from the mould.

11. A dental cast model base according to any of claims 7-10, wherein the retaining member extends through the sides of the mould and is removable from the model.

12. A dental cast model base according to any of claims 7-11, wherein the sleeve is suspended within the mould by the retaining member.

13. A dental cast model base for the production of dental models, the model base having a mould adapted to produce a dental model and removable securing means to secure the dental model formed in the mould, with the model base, and
**characterised in that** the securing means comprise a port or passage formed in the model and through or into which a retaining member can be inserted to secure the model with the base.

14. A method of casting a dental model using a dental model base as a mould comprising the steps of:-
placing one or a number of sleeves with a port or passage therethrough in position with respect to the mould side walls, retaining said sleeve or sleeves in position; and
adding the material which is to form the model into the mould, so as to at least partially incorporate the sleeve or sleeves within the material allowing the material to set with the sleeve or sleeves formed as part of the model.

15. A dental cast model base according to any preceding claim wherein the cross sectional area of the hole or passage is sufficiently small so as not to compromise the strength of the model sections.

16. A dental cast model base according to any preceding claim, wherein voids are provided between the sleeve and the retaining member.

17. A dental cast model base according to any preceding claim, wherein the mould is adapted for a model to be formed from a partial, full or edentulous impression having an anterior part of the channel and one or two lateral parts of the channel.

18. A dental cast model base according to claim 17, wherein three sleeves and respective retaining members are used, with one sleeve extending along each of the lateral parts of the mould and the third sleeve extending across the laterally extending sleeves and along the anterior part of the channel.

19. A dental cast model base according to any of the preceding claims, wherein the retaining members are fixed by friction fit into position to fix sections of the model in position after they have been relocated in the mould.

20. A dental cast model base according to any of claims 17-19, wherein the anterior section of the cast model may be secured independently of the lateral sections of the model.

21. A dental cast model base according to any preceding claim, wherein the securing means is positioned in such a way that unrestricted access to the upper and lower surfaces of the model base is available.

22. A dental cast model base according to any of the preceding claims wherein the positioning of the points of entry of the retaining members with respect to the base are such as to avoid hindrance to the structure of an articulator.

23. A dental cast model base according to any preceding claim, wherein the model base is in the form of a base suitable for attachment to an articulator.
